# EUROPÄISCHE PATENTSCHRIFT

(11) **EP 0 912 300 B1**
(45) Veröffentlichungstag und Bekanntmachung des Hinweises auf die Patenterteilung: **22.08.2001**
(21) Anmeldenummer: 97925896.9
(22) Anmeldetag: 05.06.1997
(51) Int. Cl.: B26D 1/11, B26D 1/10, B26D 7/26, B26D 3/30, B26D 7/22

(54) **VORRICHTUNG ZUM SCHNEIDEN VON AUF EINER UNTERLAGE BEFINDLICHER BACKWARE**
DEVICE FOR CUTTING BAKER'S WARE SET ON A SUPPORT
DISPOSITIF A DECOUPER DES PATISSERIES PLACEES SUR UN SUPPORT

(30) Priorität: 05.07.1996 DE 29611727 U
(43) Veröffentlichungstag der Anmeldung: 06.05.1999
(73) Patentinhaber: Krumbein, Wolfgang, 99891 Tabarz (DE)
(72) Erfinder: Krumbein, Wolfgang, 99891 Tabarz (DE)
(74) Vertreter: WALTHER, WALTHER & HINZ Patentanwälte
(86) Internationale Anmeldenummer: DE9701116
(87) Internationale Veröffentlichungsnummer: WO9801266

(56) Entgegenhaltungen:
- EP-A- 0 551 812
- EP-A- 0 712 699
- WO-A-92/14587
- DE-C- 4 443 143
- US-A- 2 656 601
- US-A- 5 086 683

## Beschreibung

Die Erfindung betrifft eine Vorrichtung zum Schneiden von auf einer Unterlage befindlicher Backware, insbesondere zum Schneiden von Kuchen auf einem Blech, mit einer Schneideinrichtung und einer Antriebsvorrichtung für die Schneideinrichtung, wobei durch die Antriebsvorrichtung die Schneideinrichtung in Richtung auf die Unterlage und von dieser weg bewegbar ist.

Blechkuchen sind bekannt; hierbei gibt es unterschiedliche Kuchenvarianten, die jedoch alle gemein haben, daß diese Kuchen auf dem Blech im Ofen gebacken werden, und auch nur relativ geringe Höhe aufweisen.

Aus der WO 92/14587 ist eine Vorrichtung zum Schneiden einer Reihe von Materialien, z. B. Holz, Metall und Stein, bekannt. Ein Schneiden von auf einem Blech befindlichen Kuchen ist mit dieser Vorrichtung nicht möglich. Die Unterlagen für die Backware und hier insbesondere Backbleche, sind aufgrund der ständigen Aufheizung bzw. Abkühlung im Ofen im Bodenbereich nie absolut plan. Mit einer Schneideinrichtung, wie in der WO 92/14587 beschrieben, bei der die Messer einen vorbestimmten Hub in vertikaler Richtung ausführen, besteht somit immer die Gefahr, daß durch die Messer das Backblech, wenn nicht durchstoßen, so doch zumindest beschädigt wird, und hiermit einhergehend die Messer ebenfalls beschädigt werden.

Die DE-A 44 43 143 zeigt ein Hebelgestänge, an dem endseitig ein Messer angebracht werden kann, um hiermit Backwaren zu schneiden.

Die US-PS 2,656,601 zeigt eine Schneideinrichtung kombiniert mit einer Markierungseinrichtung mit mehreren parallel zueinander angeordneten, schuhartigen Messern, wobei zwischen längeren Messern kürzere Messer angeordnet sind, um den Kuchen nicht nur zu schneiden, sondern auch an der Oberfläche einzuritzen.

Aus der EP-A 712 699, die die Grundlage für den Oberbegriff von Anspruch 1 bildet, ist eine Vorrichtung zum Schneiden von Kuchen der eingangs genannten Art bekannt, die diskontinuierlich arbeitet. Im Einzelnen ist hierbei ein Förderband vorgesehen, auf dem der Kuchen einer Schneideinrichtung zugeführt wird, wobei durch die Schneideinrichtung -ähnlich einem Fallbeil-Scheiben des Kuchens abgeschnitten werden. Hieraus wird deutlich, daß der Kuchen auf dem Förderband diskontinuierlich der Schneideinrichtung zugeführt wird, weil nur bei jedem Hub ein Schnitt ausgeführt werden kann. Beim Schneiden von Blechkuchen, das heißt von auf einem Blech befindlicher Backware ist allerdings ein diskontinuierlicher Schnittbetrieb absolut unwirtschaftlich; dies deswegen, weil die Kuchenbleche durchaus unterschiedliche Abmessungen aufweisen, mithin ein Messer, wie es aus der EP-A-712 699 bekannt ist, in seiner Länge immer an die Breite bzw. die Länge des Bleches, das den Kuchen trägt, angepaßt werden muß.

Der Erfindung liegt daher die Aufgabe zugrunde, eine Vorrichtung der eingangs genannten Art bereitzustellen, mit der auf einem Blech befindliche Backware nahezu in jeder beliebigen Größe kontinuierlich geschnitten werden kann.

Die Aufgabe wird erfindungsgemäß dadurch gelöst, daß die Schneideinrichtung zwei aneinander anliegende, relativ zueinander bewegliche jeweils in einem Gehäuse (20) gelagerte Messer aufweist, wobei jedes Messer in Richtung der Auslenkung des Messers federnd gegenüber dem Gehäuse abgestützt gelagert ist. Insbesondere bei viel gebrauchten Backblechen ist der Backblechboden nicht eben, vielmehr weist er große Wölbungen auf. Es soll nun einerseits gewährleistet sein, daß durch die Vorrichtung der Kuchen vollständig durchgeschnitten wird, andererseits soll aber verhindert werden, daß durch die Wölbung im Backblech das Messer Schaden nimmt. Durch die federnde Anordnung des Messers im Gehäuse wird nunmehr erreicht, daß das Messer, wenn es auf eine Wölbung im Blech trifft, entsprechend entgegen der Kraft der Feder zurückweicht.

Durch zwei aneinander anliegende, relativ zueinander bewegliche Messer wird erreicht, daß beim Schneidvorgang immer ein Messer in Eingriff mit der zu schneidenden Backware ist, während das andere Messer zum weiteren Hub ausholt. Hieraus wird deutlich, daß mit der erfindungsgemäßen Vorrichtung ein kontinuierlicher Schnittbetrieb möglich ist, weshalb Kuchen auf Blechen nahezu beliebiger Größe geschnitten werden kann. Die Anordnung von zwei aneinander anliegenden relativ zueinander beweglichen Messern weist darüber hinaus den Vorteil auf, daß während das eine Messer noch in Eingriff mit dem Kuchen steht, das andere Messer außer Eingriff gebracht wird, und mithin der Kuchen durch das eine Messer festgehalten wird, während das andere Messer aus dem Schnitt herausgeführt wird, so daß nicht die Gefahr besteht, daß durch das Messer der Kuchen und hier insbesondere der Belag quasi mit in die Höhe gehoben wird.

Dies ist von besonderem Interesse bei Obstkuchen, insbesondere Pflaumenkuchen, wobei durch den Eingriff des einen Messers der Belag festgehalten wird, während das andere Messer in die Hubbewegung vom Blech weg übergeht.

Nach einem besonderen Merkmal-der Erfindung ist vorgesehen, daß jedes Messer eine elliptische Bewegung ausführt. Hierdurch wird erreicht, daß jedes Messer den Kuchen ausschließlich während der Abwärtsbewegung, d. h. während der Bewegung in Richtung auf das Blech schneidet, nicht hingegen bei der Aufwärtsbewegung. Auch hierdurch wird verhindert, daß Teile des Kuchenbelages, insbesondere wenn es sich um Obstkuchen handelt, von dem Messer mitgenommen werden, was insbesondere der Fall wäre, wenn das Messer auch bei der Aufwärtsbewegung noch im Eingriff mit dem Kuchen wäre.

Konstruktiv ist im einzelnen vorgesehen, daß das Messer durch ein Gehäuse aufnehmbar ist. Die Antriebseinrichtung umfaßt eine Antriebswelle, die das Gehäuse aufnimmt, wobei die Antriebswelle eine Exzenterbuchse aufweist, auf der das Gehäuse lagert. Das heißt, daß bei Drehung der Antriebswelle das Gehäuse eine Bewegung korrespondierend zu der Ausbildung der Exzenterbuchse ausführt.

Um das durch die Antriebswelle auf das Gehäuse aufgebrachte Moment abzufangen, besitzt die Vorrichtung eine Einrichtung zur Abstützung des Gehäuses. Hierzu ist im einzelnen vorgesehen, daß die Einrichtung zur Abstützung des Gehäuses eine parallel zur Antriebswelle verlaufende Achse umfaßt, wobei eine am Gehäuse angeordnete Halterung vorgesehen ist, die nach Art eines Schuhes ausgebildet ist, wobei der Schuh auf die Achse steckbar ist.

Im einzelnen ist weiterhin vorgesehen, daß jedes Messer verschwenkbar von dem Gehäuse aufnehmbar ist. Hierdurch wird die Möglichkeit eröffnet, einzelne Messer oder Messersätze, bestehend aus zwei Messern, außer Eingriff mit dem Kuchen auf dem Kuchenblech zu bringen.

Um weiterhin zu verhindern, daß die Messer beschädigt werden, wenn sie seitlich an den Rand des Backblechs - wenn das Backblech schräg zugeführt wird - anlaufen, ist vorgesehen, daß die Messer quer zur Richtung der Auslenkung der Messer federnd im Gehäuse fixierbar sind. Das heißt, daß das Messer in der Lage ist, seitlich auszuweichen.

Im einzelnen ist weiterhin vorgesehen, daß jedes Messer an einem Messerklötzchen anbringbar ist, wobei das Messerklötzchen durch das Gehäuse aufnehmbar ist und wobei das Messerklötzchen in Richtung der Auslenkung des Messers federnd gegenüber dem Gehäuse abstützbar ist. Das Gehäuse besitzt im einzelnen eine Führung für das Messerklötzchen, wobei das Messer auf dem Messerklötzchen quer zur Richtung der Auslenkung des Messers fixierbar ist. Hierdurch wird erreicht, daß das Messer hemmend entgegen der durch die Feder aufgebrachten Reibkraft auf dem Messerklötzchen verschwenkt werden kann, um eben das Messer außer Eingriff mit dem Kuchen bringen zu können.

Nach einem vorteilhaften Merkmal der Erfindung sind zur Bildung eines Messersatzes zwei Gehäuse elastisch miteinander verbindbar. Durch die elastische Verbindung der beiden Gehäuse wird gewährleistet, daß die beiden Messer tatsächlich aneinander anliegend den Schneidvorgang durchführen können

Um mehrere Kuchenstreifen auf einem Blech auf einmal schneiden zu können, sind auf der Welle mehrere Vorrichtungen der eingangs genannten Art anbringbar, wobei das Gehäuse bzw. die Gehäuse eines Messersatzes lösbar und verschieblich auf der Welle bzw. der Achse fixierbar sind, um in der Breite der Kuchenstreifen variabel zu sein. Während des Schneidvorganges ist das Backblech relativ zu der Vorrichtung verschieblich,

Anhand der Zeichnungen wird die Erfindung nachstehend beispielhaft näher erläutert.
- Figur 1: zeigt die Vorrichtung in einer Seitenansicht;
- Figur 2: zeigt die Vorrichtung in einer Ansicht von vorne;

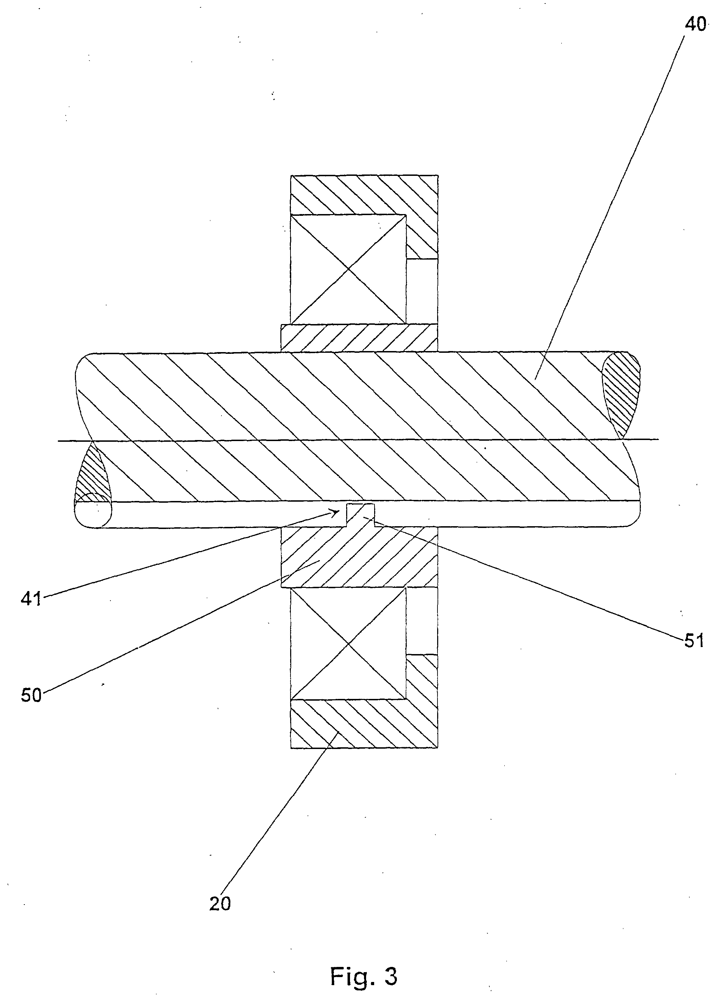

- Figur 3: zeigt einen Schnitt gemäß der Linie II - II aus Figur 2.

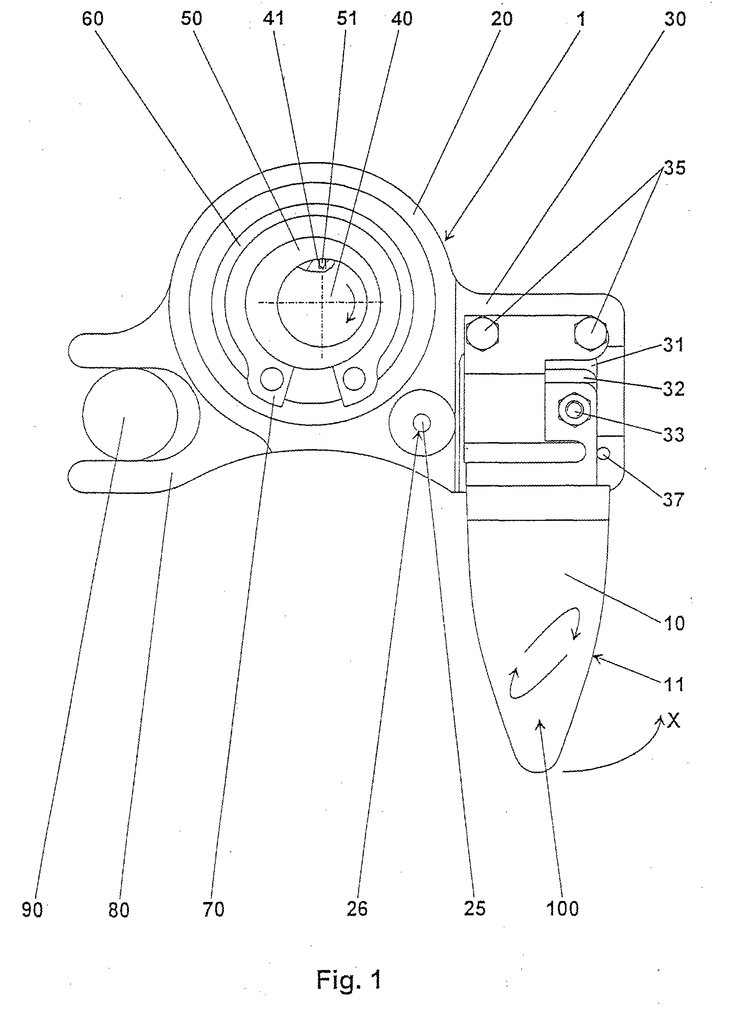

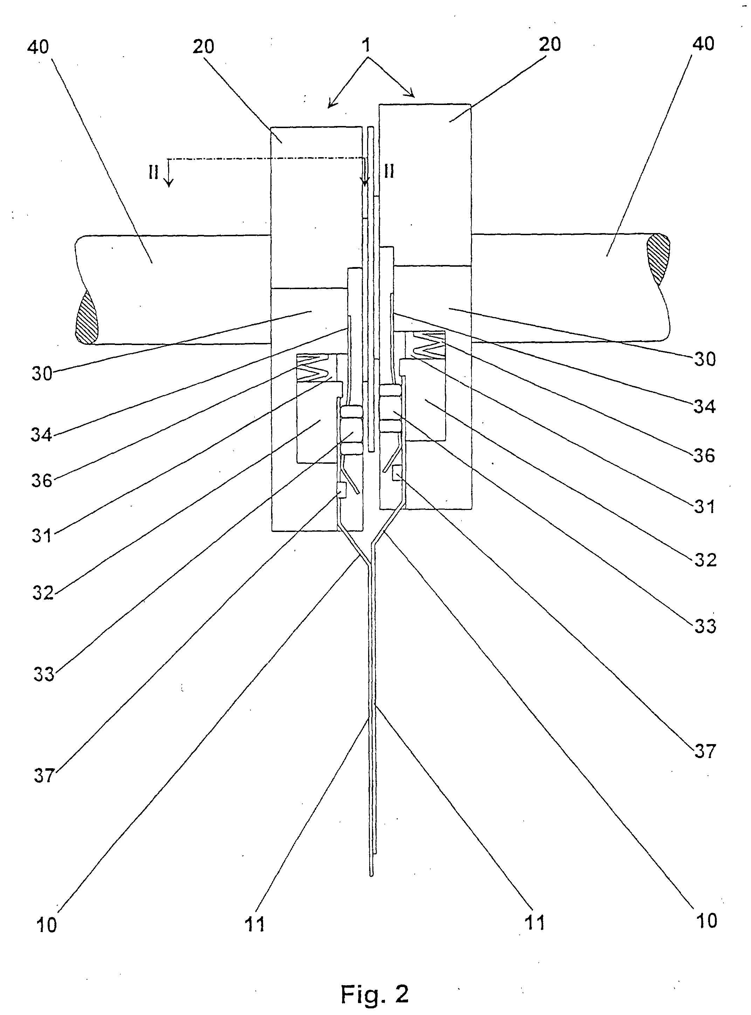

Gemäß den Figuren 1 und 2 besitzt die insgesamt mit 1 bezeichnete Vorrichtung zum Schneiden von Blechkuchen das konisch zulaufende Messer 10, wobei dessen Schneidkante 11 zur Erzielung eines besseren Schnittergebnisses gezahnt ausgebildet ist. Das Messer 10 ist in dem Gehäuse 20 angeordnet. Das Gehäuse 20 besitzt hierzu einen Gehäusekopf 30, der eine Führung 31 zur Aufnahme des Messerklötzchens 32 aufweist. An dem Messerklötzchen 32 ist das mit 10 bezeichnete Messer mittels der Schraube 33 befestigt. Gehalten wird das Messerklötzchen 32 in der Führung 31 durch die Blattfeder 34, die mittels der beiden Schrauben 35 an dem Gehäusekopf 30 befestigt ist. Das Messer 10 ist fliegend in dem Gehäuse bzw. in dem Gehäusekopf 30 gelagert; hierzu ist vorgesehen, daß das Messerklötzchen 32 durch die Spiralfeder 36 gegenüber dem Gehäuse bzw. gegenüber dem Gehäusekopf 30 abgestützt ist. Das heißt, für den Fall, daß das Messer auf einen Widerstand beim Schneiden stößt, dies kann beispielsweise eine im Backblech vorhandene Wölbung sein, daß dann das Messerklötzchen entgegen der Kraft der Feder zurückweicht und so das Messer 10 vor Beschädigungen bewahrt. Durch die Feder 34 wird nicht nur erreicht, daß das Messer seitlich ausweichen kann, was insbesondere dann erforderlich ist, wenn das Backblech schief an den Messern vorbeigeführt wird, und deswegen die Messer gegen den Rand des Backbleches verlaufen, sondern auch, um das Messer 10 nach vorne in Richtung des Pfeiles X aus dem Gehäusekopf zu verschwenken. Hierzu muß das Messer 10 zur Seite hin leicht abgehoben werden, um über den Stift 37 gehoben zu werden, bevor es dann um fast 90 ° verschwenkt werden kann. Das heißt, die Verschwenkung erfolgt im wesentlichen entgegen der Klemmkraft, die durch die Feder 34 auf das Messer aufgebracht wird. Durch das Gehäuse 20 wird weiterhin die Antriebswelle 40 aufgenommen. Auf der Antriebswelle 40 befindet sich die mit 50 bezeichnete Exzenterbuchse, wobei die Exzenterbuchse 50 einen Stift 51 aufweist, der in eine entsprechende Aussparung 41 in der Welle eingreift, und der Übertragung der Antriebskraft dient. Über die Exzenterbuchse 50 ist ein Kugellager 60 vorgesehen, daß durch einen Spannring 70 auf der Exzenterbuchse 50 gegen Verschieben gesichert ist (Fig. 1). Das Gehäuse 20 besitzt darüber hinaus die Einrichtung 80 in Form eines Schuhs zur Abstützung des Gehäuses gegenüber dem durch die Welle 40 aufgebrachten Drehmoment. Durch den Schuh 80 wird eine Achse 90 erfaßt, die schlußendlich das Gegenmoment zum Antriebsmoment durch die Welle 40 aufbringt.

Die Arbeitsweise der Vorrichtung ist nun derart, daß bei Drehung der Welle 40 das Messer 10 eine in Schneidrichtung ausgerichtete ellipsenförmige Bewegung ausführt, wie sie auf dem Messer 10 unter dem Bezugszeichen 100 dargestellt ist. Durch diese ellipsenartige Bewegung 100 wird erreicht, daß das Messer während des Rückhubes, also zu dem Zeitpunkt, zu dem das Messer angehoben ist, sich nicht im Eingriff mit dem Blechkuchen befindet und mithin die Gefahr, daß von den Zähnen des Messers 10 Teile des Belages, insbesondere der Obstbelag, abgehoben werden, relativ gering ist.

Wie bereits eingangs erwähnt, bilden zwei Messer 10 jeweils einen Messersatz, wie dies auch in Figur 2 dargestellt ist. Hierbei liegen die beiden Messer 10, die identisch ausgebildet sind, mit ihren Schnittflächen aneinander an. Jedes Messer 10 lagert in einem Gehäuse 20, wobei die beiden Gehäuse 20 im wesentlichen identisch ausgebildet sind. Da jedes Gehäuse 2 auf einer Exzenterbuchse 50 lagert, die um einen bestimmten Winkel versetzt zu der Exzenterbuchse des Gehäuses des anderen Messers auf der Welle angeordnet ist, wird erreicht, daß die beiden Messer, die zwar die gleiche elliptische Bewegung ausführen, wechselweise im Eingriff mit dem Kuchen sind. Das heißt, daß dadurch, daß immer ein Messer im Eingriff mit dem Kuchen ist, durch dieses Messer der Belag festgehalten wird, wenn das andere Messer außer Eingriff mit dem Blechkuchen gelangt. Um zu gewährleisten, daß die beiden Messer 10 mit ihren Messerschneiden aneinander entlanggleiten können, sind die beiden Gehäuse 20 durch eine Feder 25, die durch die Bohrung 26 des Gehäuses geführt ist, verbunden.

## Patentansprüche

1. Vorrichtung (1) zum Schneiden von auf einer Unterlage befindlicher Backware, insbesondere zum Schneiden von Kuchen auf einem Blech, mit einer Schneideinrichtung (10, 20) und einer Antriebsvorrichtung (40, 50) für die Schneideinrichtung, wobei durch die Antriebsvorrichtung die Schneideinrichtung (10, 20) in Richtung auf die Unterlage und von dieser weg bewegbar ist,
**dadurch gekennzeichnet,** daß
die Schneideinrichtung zwei aneinander anliegende, relativ zueinander bewegliche jeweils in einem Gehäuse (20) gelagerten Messer (10) aufweist, wobei jedes Messer (10) in Richtung der Auslenkung des Messers (10) federnd gegenüber dem Gehäuse (20) abgestützt gelagert ist.

2. Vorrichtung nach Anspruch 1,
**dadurch gekennzeichnet,** daß
jedes Messer (10) eine elliptische Bewegung ausführt.

3. Vorrichtung nach Anspruch 1,
**dadurch gekennzeichnet,** daß
die Antriebseinrichtung eine Antriebswelle (40) umfaßt, die das Gehäuse (20) aufnimmt, wobei die Antriebswelle (40) eine Exzenterbuchse (50) aufweist, auf der das Gehäuse (20) angeordnet ist.

4. Vorrichtung nach einem der voranstehenden Ansprüche,
**dadurch gekennzeichnet,** daß
die Vorrichtung (1) eine Einrichtung (80, 90) zur Abstützung des Gehäuses (20) aufweist.

5. Vorrichtung nach Anspruch 4,
**dadurch gekennzeichnet,** daß
die Einrichtung (80, 90) zur Abstützung des Gehäuses (20) eine parallel zur Antriebswelle (40) verlaufende Achse (90) umfaßt.

6. Vorrichtung nach einem der voranstehenden Ansprüche,
**dadurch gekennzeichnet,** daß
die Einrichtung zur Abstützung des Gehäuses (20) eine am Gehäuse angeordnete Halterung (80) nach Art eines Schuhs aufweist, wobei der Schuh (80) auf die Achse (90) steckbar ist.

7. Vorrichtung nach einem der voranstehenden Ansprüche,
**dadurch gekennzeichnet,** daß
jedes Messer (10) verschwenkbar von dem Gehäuse (20) aufnehmbar ist.

8. Vorrichtung nach einem der voranstehenden Ansprüche,
**dadurch gekennzeichnet,** daß
jedes Messer (10) quer zur Richtung der Auslenkung des Messers federnd im Gehäuse (20) fixierbar ist.

9. Vorrichtung nach einem der voranstehenden Ansprüche,
**dadurch gekennzeichnet,** daß
jedes Messer (10) an einem Messerklötzchen (32) anbringbar ist, wobei das Messerklötzchen (32) durch das Gehäuse (20) aufnehmbar ist, wobei das Messerklötzchen (32) in Richtung der Auslenkung des Messers (10) federnd gegenüber dem Gehäuse (20) abstützbar ist.

10. Vorrichtung nach einem der voranstehenden Ansprüche,
**dadurch gekennzeichnet,** daß
das Gehäuse (20) eine Führung (31) für das Messerklötzchen (32) aufweist, wobei das Messer (10) auf dem Messerklötzchen (32) quer zur Richtung der Auslenkung des Messers (-10) fixierbar ist.

11. Vorrichtung nach einem der voranstehenden Ansprüche,
**dadurch gekennzeichnet,** daß
zur Bildung eines Messersatzes zwei Gehäuse (20) elastisch miteinander verbindbar sind.

12. Vorrichtung nach einem der voranstehenden Ansprüche,
**dadurch gekennzeichnet,** daß
mehrere Vorrichtungen (1) auf der Welle (40) anbringbar sind.

13. Vorrichtung nach einem der voranstehenden Ansprüche,
**dadurch gekennzeichnet,** daß
das Backblech relativ zu der Vorrichtung (1) verschieblich ist.

14. Vorrichtung nach einem der voranstehenden Ansprüche,
**dadurch gekennzeichnet,** daß
das Gehäuse (20) verschieblich auf der Welle und Achse fixierbar ist.

15. Vorrichtung nach einem der voranstehenden Ansprüche,
**dadurch gekennzeichnet,** daß
die Messer (10) konisch zulaufend ausgebildet sind.

16. Vorrichtung nach Anspruch 15,
**dadurch gekennzeichnet,** daß
die Messer (10) an der Schnittkante (11) gezahnt ausgebildet sind.

## Claims

1. Device (1) for cutting bread and cake placed on a support, more particularly for cutting cakes baked on a baking tray, with a cutting facility (10, 20) and a driving device (40, 50) for the cutting facility, whereas the driving device is moving the cutting facility (10, 20) towards and away from the support,
characterized in that the cutting facility is provided with two adjacent knives (10) which are movable relative to each other and which are each carried in a housing (20), whereas each knife (10) is elastically supported relative to the housing (20) in the direction of the knife's (10) excursion.

2. Device according to claim 1,
characterized in that each knife (10) is executing an elliptic movement.

3. Device according to claim 1,
characterized in that the driving device comprises a drive shaft (40) receiving the housing (20), whereas the drive shaft (40) is provided with an eccentric bush (50) on which the housing (20) is accomodated.

4. Device according to claim 1,
characterized in that the device (1) is equipped with a facility (80, 90) for propping the housing (20).

5. Device according to claim 4,
characterized in that the facility (80, 90) for propping the housing (20) is comprising an axis (90) running parallel to the drive shaft (40).

6. Device according to one of the previous claims,
characterized in that the facility for propping the housing (20) is provided with a holding device (80) designed like a shoe and being accomodated on the housing, whereas the shoe (80) may be put onto the axis (90).

7. Device according to one of the previous claims,
characterized in that each knife (10) is pivotably receivable by the housing (20).

8. Device according to one of the previous claims,
characterized in that each knife (10) is elastically fastenable in the housing (20) transversely to the direction of the knife's excursion.

9. Device according to one of the previous claims,
characterized in that each knife (10) may be accomodated on a little knife block (32), whereas said knife block (32) is receivable by the housing (20) and whereas the knife block (32) may be elastically propped against the housing (20) in the direction of the knife's (10) excursion.

10. Device according to one of the previous claims,
characterized in that the housing (20) is fitted with a guide (31) for the knife block (32), whereas the knife (10) is fastenable onto the knife block (32) transversely to the direction of the knife's (10) excursion.

11. Device according to one of the previous claims,
characterized in that two housings (20) are elastically connectable for the formation of a knife set.

12. Device according to one of the previous claims,
characterized in that several devices (1) may be accomodated on the shaft (40).

13. Device according to one of the previous claims,
characterized in that the baking tray is movable relative to the device (1).

14. Device according to one of the previous claims,
characterized in that the housing (20) is slidingly fastenable on the shaft and on the axis.

15. Device according to one of the previous claims,
characterized in that the knives (10) are tapered.

16. Device according to claim 15,
characterized in that the knives (10) have a dentate cutting edge (11).

## Revendications

1. Dispositif (1) servant à couper du pain ou du gâteau placés sur un support, plus particulièrement à couper du gâteau cuit sur une plaque, ledit dispositif ayant un mécanisme de coupe (10, 20) et un dispositif d'entraînement (40, 50) pour le mécanisme de coupe, le dispositif d'entraînement déplaçant le mécanisme de coupe (10, 20) vers le support et l'en éloignant,
**caractérisé en ce que** le mécanisme de coupe est pourvu de deux couteaux (10) adjacents mobiles l'un par rapport à l'autre qui sont soutenus dans un boîtier (20) chacun, chaque couteau (10) étant étayé de façon flexible par rapport au boîtier (20) dans la direction de la déviation du couteau (10).

2. Dispositif selon la revendication 1,
**caractérisé en ce que** chaque couteau (10) décrit un mouvement elliptique.

3. Dispositif selon la revendication 1,
**caractérisé en ce que** le dispositif d'entraînement comprend un arbre de transmission (40) recevant le boîtier (20), l'arbre de transmission (40) étant pourvu d'une douille excentrique (50) sur laquelle repose le boîtier (20).

4. Dispositif selon l'une des revendications précédentes,
**caractérisé en ce que** le dispositif (1) est pourvu d'une installation (80, 90) pour étayer le boîtier (20).

5. Dispositif selon la revendication 4,
**caractérisé en ce que** l'installation pour étayer le boîtier (20) comprend un axe (90) parallèle à l'arbre de transmission (40).

6. Dispositif selon l'une des revendications précédentes,
**caractérisé en ce que** l'installation pour étayer le boîtier (20) possède une fixation (80) placée sur le boîtier (20), ladite fixation ayant la forme d'un sabot (80) qui peut être fiché sur l'axe (90).

7. Dispositif selon l'une des revendications précédentes,
**caractérisé en ce que** chaque couteau (10) peut être reçu de façon pivotable par le boîtier (20).

8. Dispositif selon l'une des revendications précédentes,
**caractérisé en ce que** chaque couteau (10) peut être fixé de façon flexible dans le boîtier (20) transversalement à la direction de déviation du couteau.

9. Dispositif selon l'une des revendications précédentes,
**caractérisé en ce que** chaque couteau (10) peut être attaché à un couteau-bloc (32), le couteau-bloc (32) pouvant être reçu par le boîtier (20) et pouvant être étayé par rapport au boîtier (20) de façon élastique dans la direction de la déviation du couteau (10).

10. Dispositif selon l'une des revendications précédentes,
**caractérisé en ce que** le boîtier (20) possède un guidage (31) pour le couteau-bloc (32), le couteau (10) pouvant être fixé sur le couteau-bloc (32) transversalement à la direction de déviation du couteau (10).

11. Dispositif selon l'une des revendications précédentes,
**caractérisé en ce que** deux boîtiers (20) peuvent être reliés de façon élastique pour former un jeu de couteaux.

12. Dispositif selon l'une des revendications précédentes,
**caractérisé en ce que** plusieurs dispositifs (1) peuvent être placés sur l'arbre de transmission (40).

13. Dispositif selon l'une des revendications précédentes,
**caractérisé en ce que** la plaque peut être déplacée par rapport au dispositif (1).

14. Dispositif selon l'une des revendications précédentes,
**caractérisé en ce que** le boîtier peut être fixé de façon mobile sur l'arbre et sur l'axe.

15. Dispositif selon l'une des revendications précédentes,
**caractérisé en ce que** les couteaux (10) sont coniques.

16. Dispositif selon la revendication 15,
**caractérisé en ce que** le tranchant (11) des couteaux (10) sont dentés.
